# EUROPEAN PATENT SPECIFICATION

(11) **EP 2 782 412 B1**
(45) Date of publication and mention of the grant of the patent: **03.01.2018**
(21) Application number: 12850281.2
(22) Date of filing: 09.11.2012
(51) Int. Cl.: H04W 84/00, H04M 1/00, H04M 3/487, H04M 11/04, H04M 11/08, H04W 4/04, H04L 29/08, G06Q 30/02, H04W 4/22, H04W 84/18

(54) **DETERMINING THE CARRIAGE OF A VEHICLE IN WHICH A WIRELESS TERMINAL IS LOCATED**
BESTIMMEN DES TEILS EINES FAHRZEUGS, IN DEM SICH EIN DRAHTLOSES ENDGERÄT BEFINDET
DÉTERMINATION DU WAGON D'UN VÉHICULE DANS LEQUEL UN TERMINAL SANS FIL EST SITUÉ

(30) Priority: 14.11.2011 JP 2011248542
(43) Date of publication of application: 24.09.2014
(73) Proprietor: NTT DOCOMO, INC., Chiyoda-ku Tokyo 100-6150 (JP)
(72) Inventor: KIKUCHI, Daisuke, Tokyo 100-6150 (JP)
(74) Representative: Hoffmann Eitle
(86) International application number: PCT/JP2012/079136
(87) International publication number: WO 2013/073473

(56) References cited:
- JP-A- 2004 129 119
- JP-A- 2004 129 119
- JP-A- 2011 205 544
- JP-A- 2011 205 544
- US-A1- 2006 235 833
- US-A1- 2009 300 035
- US-A1- 2011 211 563
- US-B1- 8 024 330

## Description

### Technical field

The present invention relates to technology for distributing information to passengers in a carriage of a train or other vehicle.

### Background art

Various techniques are known for distributing information to passengers in a carriage of a train. For example, according to JP2003-140582A Patent Document 1, in relation to advertisements in a carriage of a train, a user is able to obtain a list of additional information by wireless communication and select and download a preferred advertisement(s) included in the list.

### Prior art

### Patent Document

[Patent Document 1] JP2003-140582A

JP 2004 129119 A refers to a method for registering location. Here, when a mobile terminal takes the transportation, a transportation identification number notifying device notifies the mobile terminal of the transportation identification number of the transportation.

US 2011/211563 A1 relates to the technical field of location tracking systems, such as indoor location tracking. Transmitter tags are disposed throughout the area where the location tracking is carried out. The transmitter tags are configured to transmit their unique identifiers.

US 2006/235833 A1 relates to a system and a method for integrating incident information and intelligence. More particularly, this invention relates to evaluating information from telecommunications system or other information sources indicating that an incident may have occurred and characterizing the possible incident.

### Summary of the Invention

### Problem to be solved by the Invention

When a wireless terminal is capable of receiving information from radio devices installed in a train, there is a possibility that a wireless terminal may receive information transmitted by a radio device other than a radio device installed in a carriage in which a user of the wireless terminal is located. For example, when a train in which a user is located passes another train running close by in an opposite direction or overtakes a train running close by in the same direction, the wireless terminal may receive information transmitted by a radio device(s) installed in the other train. Also, when a train includes two or more carriages, there is a possibility that a wireless terminal may receive information transmitted by a radio device installed in another carriage(s) of the same train.

An object of the present invention is to ensure that information relevant to a carriage in which a user is located is provided to the user.

### Means for addressing the problem

According to an aspect of the present invention, there is provided a wireless terminal according to claim 1.

Preferably, the second communication unit transmits a content including information about the carriage, the content being provided by the information distribution apparatus.

In yet another aspect of the present invention, there is provided an information distribution system including: a plurality of radio devices installed in a plurality of carriages; a plurality of the wireless terminals; and the information distribution apparatus.

In yet another aspect of the present invention, there is provide a method of specifying a carriage of a vehicle, according to claim 4.

There is provided a program according to claim 5.

### Effects of the Invention

According to the present invention, provision of information relating to a carriage in which a user is located can be provided to the user is ensured.

### Brief description of the Drawings

FIG. 1 shows an outline of a configuration of an information distribution system.
FIG. 2 is a block diagram showing a hardware configuration of a user terminal.
FIG. 3 is a block diagram showing a functional configuration of a control unit of the user terminal.
FIG. 4 is a block diagram showing a hardware configuration of an information distribution apparatus.
FIG. 5 is a block diagram showing a functional configuration of a control unit of the information distribution apparatus.
FIG. 6 is a flowchart of processing performed by a user terminal.
FIG. 7 shows an example of a screen displayed by the user terminal.
FIG. 8 is a flowchart of processing performed by the information distribution apparatus

### Description of reference numerals

10···information distribution system, T1··· train, C1, C2, and C3···carriages, 100···user terminal (wireless terminal), 110···control unit, 111···obtaining unit, 112···determination unit, 113···supplying unit, 120···storage unit, 130···first communication unit, 140···second communication unit, 150···display, 160··· input device, 200···operator terminal, 300···crew terminal, 400, 401, 402, and 403···displays, 500, 501, 502, and 503···access points (radio device), 600··· information distribution apparatus, 610···control unit, 611···obtaining unit, 612 ···generation unit, 613···supplying unit, 614···distribution controller, 620··· storage unit, 630···communication unit, 700···access point database (APDB), 800···network

### Modes for carrying out the Invention

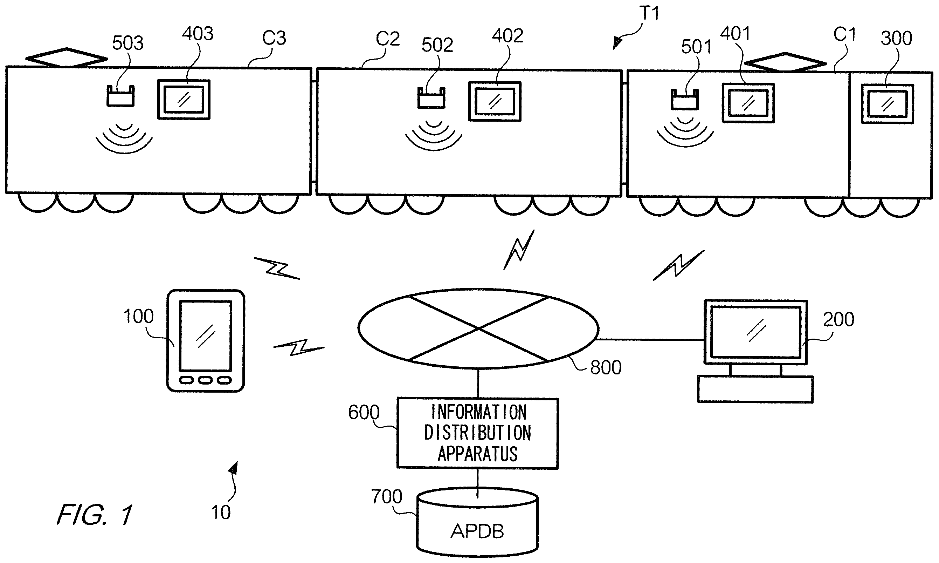

FIG. 1 shows an information distribution system 10 according an embodiment of the present invention. Information distribution system 10 according to the present embodiment is configured to distribute information corresponding to a carriage of a train carrying passengers. The train includes two or more carriages connected to one another. In FIG. 1, only one train T1 is depicted, and other trains accommodated in the system are omitted. Information distribution system 10 is configured to obtain information from two or more trains and distribute information corresponding to the trains. Similary, two or more user terminals 100 are accommodated in the system. In addition, the number of carriages included in a train is not limited to the example shown in Fig. 1 in which the train includes carriages C1, C2, and C3.

Hereinafter, the word 'distribute' is used to refer to transmission of information to a device or terminal that requires the information. In the embodiment, a possible receiver of distributed information includes at least one of, user terminal 100, operator terminal 200, crew terminal 300, and displays 401, 402, and 403.

Information distribution system 10 includes user terminal 100, operator terminal 200, crew terminal 300, displays 401, 402, and 403, access points (hereinafter referred to as 'APs') 501, 502, and 503, information distribution apparatus 600, access point database (hereinafter referred to as 'APDB') 700, and network 800.

User terminal 100 is a wireless terminal held by a passenger aboard train T1. Thus, a 'user' in this example is equivalent to a passenger of a train. User terminal 100 may be a mobile telephone (including a smart phone), a tablet device or the like. Alternatively, user terminal 100 may be a portable game console, electronic book reader, or the like. User terminal 100 is configured to perform wireless communication with distribution apparatus 600 via network 800, and with APs 501, 502, and 503 by a wireless LAN (LOCAL AREA NETWORK).

Operator terminal 200 is a communication terminal used by a party managing traffic control. Operator terminal 200 may be configured to perform communication either by wire or wirelessly. Operator terminal 200 performs communication with distribution apparatus 600. In addition, operator terminal 200 is capable of communicating with crew terminal 300.

Crew terminal 300 is a wireless terminal used by a train crew (in this case, a crew of train Tl). Crew may include a conductor, driver or other train staff. Crew terminal 300 communicates with information distribution apparatus 600 via network 800. In addition, crew terminal 300 is capable of communicating with operator terminal 200.

In one embodiment, functionality of operator terminal 200 and crew terminal 300 is the same except for a difference in location, namely, location inside or outside a train. Briefly, operator terminal 200 and crew terminal 300 include at least a communication unit that communicates with information distribution apparatus 600, a display that displays information, and a controller that controls the communication unit and the display. Preferably, operator terminal 200 and crew terminal 300 are equipped with a keyboard, touch screen or other input device for input of instructions.

Displays 401, 402, and 403 are displays provided in carriages C1, C2, and C3, respectively. Displays 401, 402, and 403 communicate with information distribution apparatus 600 via network 800 to obtain a content and displays an image based on the content. Since displays 401, 402, and 403 are provided to notify information to passengers, displays 401, 402, and 403 are mounted such that they can be viewed with ease by passengers.

Hereinafter, in a case where displays 401, 402, and 403 need not be distinguished from one another, they simply will be referred to as 'display 400' Two or more displays 400 may be provided in a carriage, but each display need not necessarily have a communication unit. Rather, a single communication unit may be configured to receive a content and supply the content to two or more displays 400.

APs 501, 502, and 503 are radio devices installed in carriages C1, C2, and C3, respectively. APs 501, 502, and 503 function as access points for a wireless LAN. Each of APs 501, 502, and 503 intermittently transmits from an antenna a radio signal including identification information of an AP, which identification information is indicative of a carriage in which the AP is installed. Supposing that strengths of radio signals transmitted by APs 501, 502, and 503 are substantially the same. Identification information according to the present embodiment may be expressed by a character string, numeral, or a combination thereof. Predetermined rules are assigned for radio signals transmitted by APs 501, 502, and 503 such that the signals are distinguishable from those emitted by radio devices present outside the train.

Hereinafter, in a case where APs 501, 502, and 503 where it is not necessary to distinguish the APs individually, they simply will be referred to as 'AP 500.' In the present embodiment, a single AP 500 is installed in a carriage. In one embodiment two or more APs 500 may be installed in each carriage. When two or more APs 500 are installed in a carriage, the two or more APs 500 may transmit the same identification information indicative of the carriage. Alternatively, the two or more APs 500 installed in a same carriage may be associated in APDB 700.

Information distribution apparatus 600 is a computer that transmits content. The content is information relating to a carriage of a train, and the information may differ depending on a carriage. The content may include information (for example, news) distributed to two or more carriages. Information distribution apparatus 600 is configured to obtain data from APDB 700.

APDB 700 is a database in which an association between an access point and a carriage in which the access point is installed is described. Specifically, identification information included in a radio signal transmitted by AP 500 and a carriage identifier indicative of a carriage of a train are stored correspondingly in APDB 700. The carriage identifier is expressed by a character string, numerals, or a combination thereof, indicating a train and a carriage number of the train. Upon receipt of the identification information from information distribution apparatus 600, APDB 700 transmits a carriage identifier corresponding to the identification information to information distribution apparatus 600. APDB 700 may be incorporated in information distribution apparatus 600.

Network 800 is a network via which user terminal 100, operator terminal 200, crew terminal 300and display 400, information distribution apparatus 600 are communicated. Specifically, network 800 includes at least a wireless network (For example, a mobile communication network) connectable by user terminal 100crew terminal 300. Network 800 may be a combination of wireless network and other network (for example, the Internet). For example, operator terminal 200 and information distribution apparatus 600 may communicate with each other via the Internet.

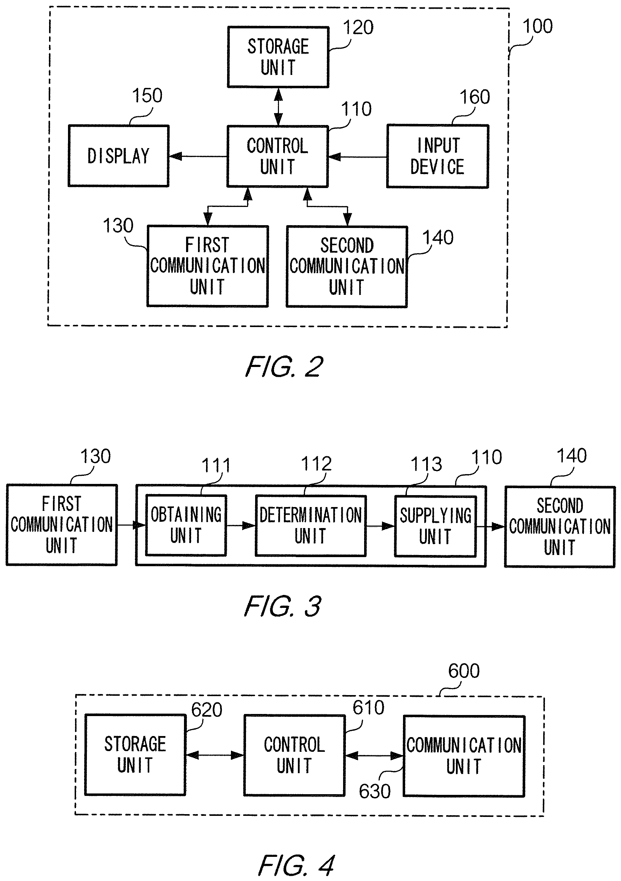

FIG. 2 is a block diagram showing a hardware configuration of user terminal 100. User terminal 100 includes at least a control unit 110, storage unit 120, first communication unit 130, second communication unit 140, display 150, and input device 160. Optionally, user terminal 100 may include a speaker, microphone, digital camera, and acceleration sensor.

Control unit 110 controls all of the units of user terminal 100. Control unit 110 includes a CPU (CENTRAL PROCESSING UNIT) or other processors, and a memory including a ROM (READ ONLY MEMORY), RAM (RANDOM ACCESS MEMORY), and the like. Control unit 110 executes a program(s) to control all the units of user terminal 100.

Storage unit 120 stores data. Storage unit 120 includes a flash memory, hard drive, or the like. Storage unit 120 can store data for processing, which processing is performed by control unit 110. Specifically, a history of communications with AP 500 and programs can be stored.

First communication unit 130 is used for communication with AP 500 or other access points of a wireless LAN. Second communication unit 140 is used for communication via network 800. Thus, in the present embodiment first communication unit 130 and second communication unit 140 are communication interfaces operable by different communication protocols.

Display 150 displays an image. For example, display 150 includes a display panel in which a liquid crystal or an organic EL (ELECTROLUMINESCENCE) element is employed, and a drive circuit that drives the elements (i.e., pixels) of the display panel. Input device 160 receives instructions input by a user. For example, input device 160 may be keys, buttons or a touch screen placed on the display panel. Input device 160 outputs data indicative of a user's instruction to control unit 110.

FIG. 3 is a block diagram showing a functional configuration of control unit 110. Control unit 110 executes a program(s) to implement functionalities of obtaining unit 111, determination unit 112, and supplying unit 113.

Obtaining unit 111 obtains a radio signal received by first communication unit 130. Obtaining unit 111 specifies the obtained radio signal, checks whether predetermined rules are assigned to the signal, and stores the rules together with a reception time period, and signal strength in RAM. Hereinafter, such stored information (rules, reception time period, and signal strength) will be referred to as 'a communication log'. When two or more radio signals are received, obtaining unit 111 generates and stores a communication log for each of the two or more received radio signals.

Determination unit 112 determines an AP 500 installed in a carriage in which a user is aboard from two or more access points transmitting a radio signal received by first communication unit 130 based on a log of the radio signal obtained by obtaining unit 111.

Supplying unit 113 outputs data including information indicative of a result of a determination made by determination unit 112 to second communication unit 140. Second communication unit 140 transmits the data supplied by supplying unit 113 to information distribution apparatus 600. The data includes identification information included in the radio signal as information based on a result of a determination made by determination unit 112. Optionally, the data may include other information.

FIG. 4 is a block diagram showing a hardware configuration of information distribution apparatus 600. As shown in FIG. 4, information distribution apparatus 600 includes control unit 610, storage unit 620, and communication unit 630. Control unit 610 controls information distribution apparatus 600. Specifically, control unit 610 includes a processor and memory and controls all the units of information distribution apparatus 600 by executing a program(s). Storage unit 620 includes a hard drive or the like, to store data. Contents may be stored in storage unit 620. Communication unit 630 connects information distribution apparatus 600 with network 800 to perform communication with another node. Communication unit 630 receives data and distributes a content, which performs the functionalities of a receiving unit and distribution unit of the present invention.

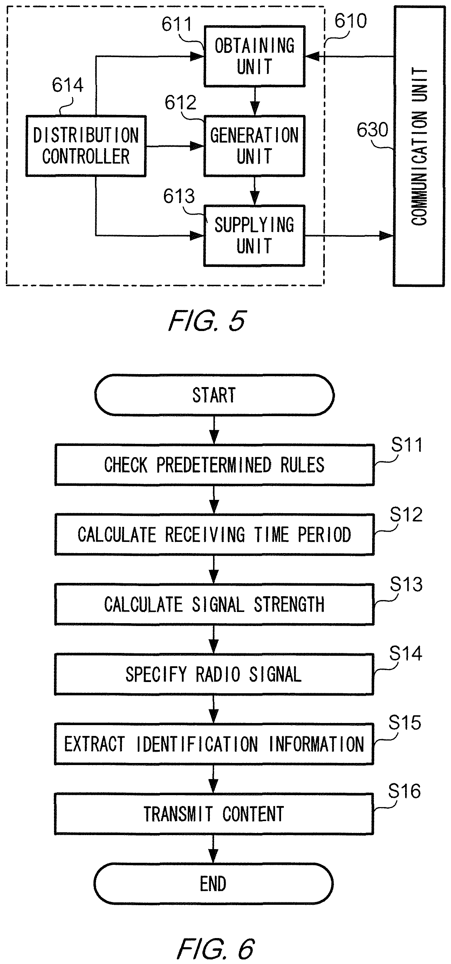

FIG. 5 is a block diagram showing a functional configuration of control unit 610. Control unit 610 implements the functionalities of obtaining unit 611, generation unit 612, supplying unit 613, and distribution controller 614 which are shown in FIG. 5 by executing a program(s).

Obtaining unit 611 obtains the data transmitted by user terminal 100 via communication unit. Obtaining unit 611 may obtain data from two or more user terminals 100 owned by different users. Generation unit 612 generates a content that is obtained by obtaining unit 611. Specifically, generation unit 612 generates content including information corresponding to a carriage, and supplying unit 613 supplies the content to communication unit 630.

Distribution controller 614 controls a timing of transmission of the content. Distribution controller 614 transmits the content when a predetermined condition is fulfilled. Distribution controller 614 may control a timing of generation of content by adjusting a timing of generation of the content by generation unit 612, or by adjusting a timing of a supply of the content from supplying unit 613 to communication unit 630. In one embodiment, distribution controller 614 is omitted from information distribution apparatus 600. In this case, information distribution apparatus 600 distributes the content without controlling a timing of transmission.

Hereinbefore, explanation of a configuration of information distribution system 10 has been made. In the configuration, a user carrying user terminal 100 boards train T1. Supposing that the user is situated in a carriage no. 2 (C2). User terminal 100 situated in C2 receives a radio signal from AP 500. It is possible that user terminal 100 may receive a radio signal(s) transmitted by an AP(s) 500 of another carriage(s) or access point(s) near the railway in addition to AP 502. The another carriage(s) may include a carriage of a train running close by to T1 in an opposite direction or in the same direction at a speed different from that of T1.

Under the circumstances, user terminal 100 estimates a carriage on which the user is aboard. The estimation is made by user terminal 100 by use of a radio signal transmitted by AP 500 for the purpose of estimation. User terminal 100 estimates a carriage in which a user is aboard, and transmits the data including identification information of the estimated carriage to information distribution apparatus 600.

FIG. 6 is a flowchart showing processes performed by user terminal 100. Control unit 110 of user terminal 100 checks an existence of the predetermined rules, a reception time period, and signal strength for each of radio signals received by first communication unit 130 (steps S11, S12, and S13). Specifically, control unit 110 refers to communication logs of the received radio signals. It is noted that the processes of steps S11, S12, and S13 can be performed in an order different from that exemplified in FIG. 6.

In step S11, control unit 110 determines whether the radio signal complies with the predetermined rules. Control unit 110 determines that a radio signal(s) that is not compliant with the predetermined rules has not been transmitted by access point AP 502 in a carriage (C2) in which a user is aboard. Thus, a radio signal(s) transmitted by an access point(s) that is not installed in train Tl is excluded by control unit 110. As a result, radio signals transmitted by wireless LAN devices (mobile routers, for example) owned by passengers are excluded.

In step S12, control unit 110 determines a reception time period during which a radio signal is received. The reception time period may be equal to a length of a time slot during which the radio signal is continuously detected. Alternatively, the reception time period may be equal to a sum of lengths of time slots during which the radio signal is detected in a case that the radio signal is transmitted intermittently. Control unit 110 selects a radio signal(s) whose reception time period is greater than a threshold value as a candidate of a signal that was transmitted by an access point (502) of a carriage (C2) that the user is on board and excludes the other radio signal(s).

In step S13, control unit 110 calculates a signal strength indicative of a strength of a received radio signal. The calculation may be performed based either on a maximum signal strength or on an average signal strength.
Alternatively, the calculation may include a determination of whether changes in signal strength lie within a predetermined range (for example, less than 10%).
The calculation methods described above can be combined. Control unit 110 extracts a radio signal(s) which satisfies a predetermined condition with regard to signal strength and excludes the other radio signal(s).

After completion of the processes in steps S11 to S13, control unit 110 selects a radio signal based on the results of process in step S14. Specifically, control unit 110 may select a radio signal having a maximum strength from among radio signals that have not been excluded yet. Alternatively, control unit 110 calculates points for each radio signal in steps S12 and S13 and determines a radio signal having a highest totalized point.

Next, control unit 110 extracts identification information included in a radio signal determined in step S14 (step S15). The extraction of the identification information is substantially equivalent to determination of an AP 500. Stated otherwise, in the present embodiment, control unit 110 determines identification information included in the radio signal, to determine AP 500 corresponding to the identification information. After determination of the identification information, control unit 110 outputs data including the determined identification information to second communication unit 140 from which the data is transmitted (step S16).

As shown in the foregoing, a carriage in which a user is aboard is estimated from a radio signal based on signal strength and reception time period, and thus accuracy of estimation is improved. Specifically, user terminal 100 selects an AP 500 from which a radio signal is received over a relatively long time, so as to identify an AP 500 installed in a carriage moving together with the user. As a result, a possibility of mistakenly identifying an AP500 installed in another train running close by and that can be received over only a short duration of time, with an AP 500 installed in a carriage in which a user is aboard will be reduced. User terminal 100 selects a radio signal having greater signal strength to specify an AP 500 located closer to the user. As a result, a possibility of mistakenly identifying an AP500 installed in another carriage of a same train with an AP 500 installed in a carriage of the same train in which the user is aboard will be reduced.

It is possible to carry out the estimation described above two or more times by user terminal 100. In one embodiment estimation is performed repeatedly at certain intervals. This is because a user can move from one carriage to another in a train or can change trains. Repeated estimations and transmissions of data performed by user terminal 100 will affect accurate identification of a carriage in which a user is currently aboard.

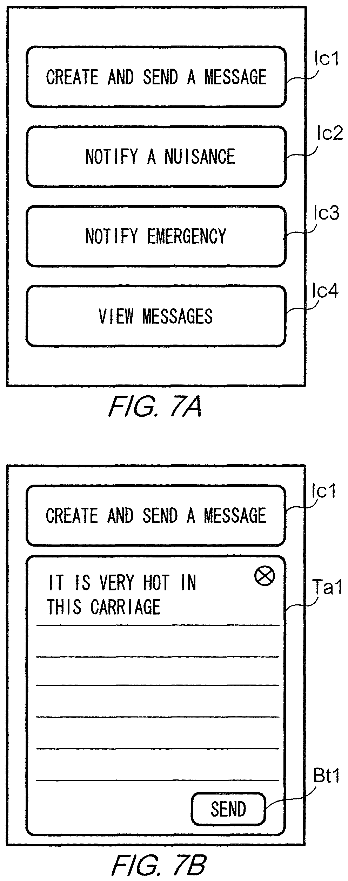

As described above, user terminal 100 may add information other than the identification information to the data. FIG. 7 exemplifies a screen displayed on display 150 of user terminal 100. User terminal 100 may download image data to display the screen from a predetermined WEB site. Alternatively, user terminal 100 may receive image data from AP 500.

Icons IC1, IC2, IC3, and IC4 are depicted in a screen show in FIG. 7A. Icon IC1 is selected by a user to report a situation pertaining to the carriage or incidents occurring in the carriage. When the user selects icon IC1, user terminal 100 displays a screen shown in FIG. 7B to receive an instruction for inputting a message made by the user. A text message input by the user is displayed in a text area TA1. Button BT1 is selected by the user to finish inputting the message.

Icon IC2 is selected to notify occurrence of a nuisance, which may include molestation, harassment, and other incidents experienced by a user in a train. Icon IC3 is selected by the user to notify an emergency. For example, this button is selected when the user notices that a passenger has suddenly become or is in some form of serious trouble. Icon IC4 is selected to view messages posted by passengers of a carriage in which the user is aboard.

User terminal 100 may transmit data responsive to selection of any one of icons IC2, IC3, IC4 and button BT1. In this case, the data including the identification information and information corresponding to a user's instruction (selection of icons) is transmitted by user terminal 100. Stated otherwise, posting and viewing of a message and notifications are managed based on the data.

Upon receipt of the data, information distribution apparatus 600 generates a content and distributes the content to appropriate users. For example, when a message is posted, information distribution apparatus 600 stores the message in association with identification information in storage unit 620. After that, upon receipt of a request for viewing messages from a user of user terminal 100, information distribution apparatus 600 specifies, based on the identification information included in the data, a carriage in which a user is aboard, and generates a content containing a message(s) posted from a user(s) in the same carriage.

Upon receipt of notification of a nuisance or emergency, information distribution apparatus 600 distributes content to at least one of operator terminal 200, crew terminal 300 and display 400. For example, in a case of notification of an emergency, when content is received display 400 displays a message such as 'An emergency is occurring in this carriage!' In this way, the emergency is notified to passengers in the carriage and a quick and appropriate response to the emergency can be made. In a case of notification of a nuisance, when content is received display 400 displays a message such as 'An occurrence of a nuisance in this carriage has just been reported.' In this way, passengers in the carriage will be notified of the nuisance. Additionally, it is expected that display of such a message will have a deterrent effect and help prevent re-occurrence of the nuisance.

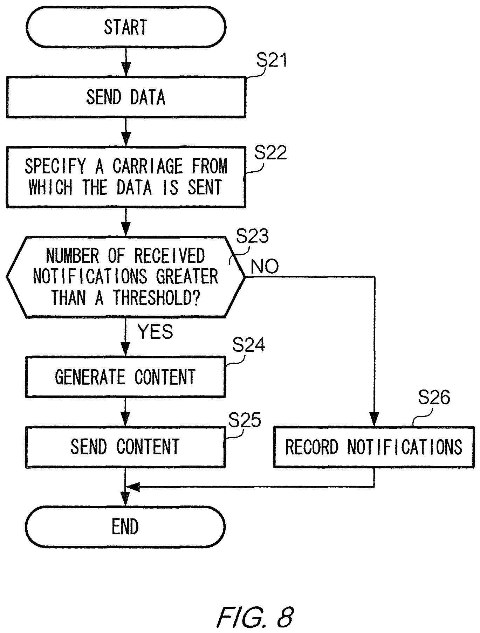

FIG. 8 is a flowchart of processes performed by information distribution apparatus 600 when a notification described above is issued. Upon receipt of data pertaining to notice of nuisance or emergency (step S21), control unit 610 of information distribution apparatus 600 specifies a carriage in which the notification was issued based on identification information included in the data (step S22). Control unit 610 can specify a type of the notification as well as the carriage in which notification is issued.

Next, control unit 610 determines whether the number of notifications (i.e., the number of received data) is greater than a predetermined based on a threshold (step S23). A threshold is introduced for each type of notification. Values of the threshold may differ depending on a type. The determination is performed for each carriage by control unit 610. Stated otherwise, control unit 610 counts the notifications for each carriage and compares the counted number with the threshold for each carriage in step S23. The counted number is stored in control unit 610 and can be used later by control unit 610.

The determination in step S23 may be repeated by a predetermined time period. For example, control unit 610 collects notifications for five minutes and determines a number of collected notifications with a predetermined threshold. By doing so, a content can be mistrusted when notifications rapidly increase.

If the number of notifications is greater than the threshold, control unit 610 generates a content (step S24) and transmits the generated content via communication unit 630 (step S25). When the number of notifications is less than the threshold. Control unit 610 records the number of notifications use of the determination of step S23 performed for the next time (step S26) before terminating the processing. Specifically, control unit 610 increments values of counters obtained for each type and carriage so as to become ready for the process of step S23 next time.

By performing the processes described above by information distribution apparatus 600, content is distributed when a predetermined number of notifications is issued by users. In this way, a notification issued with mischievous intention or other invalid notifications can be ignored.

In one embodiment, information distribution apparatus 600 may extract a particular keyword(s) from a massage posted by a user for evaluation of a situation of a carriage. For example, information distribution apparatus 600 extracts the keywords 'drunken', 'dander', 'malfunction', 'hot', 'cold' and the like from a message. If a number of the keywords greater than a threshold are extracted or a keyword is extracted from messages posted by more than a predetermine number of users, information distribution apparatus 600 may transmit a content corresponding to the extracted keyword to. A flowchart shown in FIG. 7 can be applied to this case.

For example, the keyword 'hot' or 'cold' is extracted from a message posted by a passenger enables the operator or train crew to recognize how the passengers feel with regard to the temperature on a carriage basis. The train crew who has recognized situations in carriages via crew terminal 300 or the operator, may change a temperature setting of a an air conditioner. Extraction of a keyword(s) relating to an event that can bring about a delay in a train can prevent the event or reduce an effect of the event.

### Modifications

It is possible to implement the present invention in embodiments other than the embodiment described above. For example, the present invention can be implemented by the modified examples described below. It is noted that the modified examples can be combined to implement the present invention.
(1) A radio device according to the present invention is not limited to a access point of a wireless LAN. For example, radio device according to the present invention is a radio device compliant with BLUETOOTH (trademark), or a radio device in which an RFID (RADIO FREQUENCY IDENTIFICATION) technology is applied. A radio device according to present invention may adopt a communication protocol the same as that used in a network by which a wireless terminal and an information distribution apparatus are communicated. In this case, in a wireless terminal according to the present invention, a first communication unit is configured to receive a radio signal and a second communication unit configured for transmission may be implemented to a single hardware device.
(2) A radio device according to the present invention may transmit a carriage identifier as the identification information. In this case, APDB 700 can be omitted.
(3) In the present invention, different thresholds used for a process of step S23 may be provided depending on a train or carriage. For example, the threshold may be set according to a capacity of a carriage, or the threshold may be set differently depending on a date and time (for example, weekdays/weekend and a rush hour/other time). When information distribution apparatus obtains information on a degree of crowding for each carriage, a threshold set for each carriage may be set according to the degree of crowding of the carriage.
(4) A carriage of the present invention is not limited to a carriage of a train. For example, the present inevntion can also be applied to carriages included in a trolley bus or a vehicle or other transportation. Also, the present invention can be applied to a train including only a single carriage.
(5) It is possible to perform the estimation of a carriage described above based only on a reception time period or a signal strength.

An information distribution system according to the present invention includes: a plurality of radio devices installed in a plurality of carriages; a plurality of wireless terminals; and an information distribution apparatus. Each of the plurality of wireless terminals includes: a first communication unit that receives a plurality of radio signals transmitted by the plurality of radio devices; a determination unit that specifies, based on a reception time period and signal strength of the plurality of radio signals received by the first communication unit, a radio device installed in the carriage from among a plurality of radio devices transmitting the plurality of radio signals; and a second communication unit that transmits data including identification information indicative of the radio device specified by the determination unit to an information distribution apparatus. The information distribution apparatus includes: a receiving unit that receives from a plurality of wireless terminals data including identification information indicative of a radio device from which a wireless terminal has received a radio signal and a carriage in which a user of the wireless terminal is aboard; a generation unit that generates a content including information corresponding to the carriage based on the data received by the receiving unit; and a distribution unit that distributes the content generated by the generation unit.

Details of how to implement functionalities described above to hardware are not limited to the embodiment exemplified above.

(6) In addition to a wireless terminal, information distribution apparatus, and information distribution system accommodating the wireless terminal and the information distribution apparatus, the present invention provides a program executable by a wireless terminal information distribution apparatus and a method of specifying a carriage in which a user is aboard. The program may be stored in a storing medium including an optical disk. Alternatively, the program may be downloaded to a user terminal via a network including the Internet and installed therein.

## Claims

1. A wireless terminal (100) comprising:
a first communication unit (130) configured to receive a plurality of radio signals from a plurality of radio devices including a radio device installed in a carriage of a vehicle on which the wireless terminal is aboard; **characterized by**
a control unit (110) configured to calculate reception time period and signal strength of the plurality of radio signals received by the first communication unit (130), wherein the reception time period is equal to the length of a time slot during which the radio signal is detected or to the sum of the lengths of time slots during which the radio signal is detected if the radio signal is transmitted intermittently, wherein the control unit is configured to exclude the radio signals having a reception time period below a predetermined threshold,
a determination unit (112) configured to determine, based on the reception time period and the signal strength of the plurality of radio signals received by the first communication unit (130), a radio device from among the plurality of radio devices transmitting those radio signals that have not been excluded by the control unit, and specifying said determined radio device as the radio device installed in the carriage; and
a second communication unit (140) configured to transmit data including identification information indicative of the radio device specified by the determination unit (112) to an information distribution apparatus (600).

2. The wireless terminal (100) according to Claim 1, wherein the second communication unit (140) is configured to transmit a content including information about the carriage, the content being provided by the information distribution apparatus (600).

3. An information distribution system comprising: a plurality of radio devices installed in a plurality of carriages; a plurality of wireless terminals (100) according to claim 1; and an information distribution apparatus (600),
wherein
the information distribution apparatus (600) comprising:
a receiving unit (611) configured to receive, from the plurality of wireless terminals (100), data including identification information indicative of a radio device installed in a carriage of a vehicle from which a wireless terminal (100) has received a radio signal and information about a carriage in which a user of the wireless terminal (100) is aboard;
a generation unit (612) configured to generate a content including information corresponding to the carriage based on the data received by the receiving unit (611); and
a distribution unit (613) configured to distribute the content generated by the generation unit (612) to appropriate users.

4. A method of specifying a carriage of a vehicle, comprising:
a first step of receiving, at a wireless terminal, a plurality of radio signals from a plurality of radio devices including a radio device installed in a carriage on which the wireless terminal is aboard; **characterized by**
a second step of calculating, at the wireless terminal, reception time period and signal strength of the plurality of radio signals received by the first communication unit (130), wherein the reception time period is equal to the length of a time slot during which the radio signal is detected or to the sum of the lengths of time slots during which the radio signal is detected if the radio signal is transmitted intermittently,
a third step of excluding, at the wireless terminal, the radio signals having a reception time period below a predetermined threshold,
a fourth step of determining, at the wireless terminal, based on the reception time period and the signal strength of the plurality of radio signals received in the first step, a radio device from among the plurality of radio devices transmitting those radio signals that have not been excluded, and specifying said determined radio device as the radio device installed in the carriage; and
a fifth step of transmitting, at the wireless terminal, data including identification information indicative of the radio device specified in the fourth step to an information distribution apparatus (600).

5. A program that causes a computer to execute a method according to claim 4.

## Patentansprüche

1. Drahtloses Endgerät (100), umfassend:
eine erste Kommunikationseinheit (130), die dazu konfiguriert ist, eine Vielzahl von Funksignalen von einer Vielzahl von Funkvorrichtungen zu empfangen, die eine Funkvorrichtung einschließen, die in ein Fahrgestell eines Fahrzeugs eingebaut ist, an Bord dessen sich das drahtlose Endgerät befindet; **gekennzeichnet durch**
eine Steuereinheit (110), die dazu konfiguriert ist, eine Empfangszeitdauer und eine Signalstärke der Vielzahl von Funksignalen zu berechnen, die durch die erste Kommunikationseinheit (130) empfangen werden, wobei die Empfangszeitdauer gleich der Länge eines Zeitfensters, während dessen das Funksignal detektiert wird, oder gleich der Summe der Längen von Zeitfenstern, während deren das Funksignal detektiert wird, wenn das Funksignal mit Unterbrechungen übermitteln wird, ist, wobei die Steuereinheit dazu konfiguriert ist, die Funksignale, die eine Empfangszeitdauer unterhalb einer vorbestimmten Schwelle aufweisen, auszuschließen,
eine Bestimmungseinheit (112), die dazu konfiguriert ist, basierend auf der Empfangszeitdauer und der Signalstärke der Vielzahl von Funksignalen, die durch die erste Kommunikationseinheit (130) empfangen werden, eine Funkvorrichtung aus der Vielzahl von Funkvorrichtungen, die diese Funksignale überträgt, die nicht durch die Steuereinheit ausgeschlossen worden sind, zu bestimmen und die bestimmte Funkvorrichtung als die in das Fahrgestell eingebaute Funkvorrichtung zu spezifizieren; und
eine zweite Kommunikationseinheit (140), die dazu konfiguriert ist, Daten, die eine Identifikationsinformation einschließen, die die durch die Bestimmungseinheit (112) spezifizierte Funkvorrichtung anzeigt, an eine Informationsverteilungsvorrichtung (600) zu übermitteln.

2. Drahtloses Endgerät (100) nach Anspruch 1, wobei die zweite Kommunikationseinheit (140) dazu konfiguriert ist, einen Inhalt zu übermitteln, der eine Information über das Fahrgestell einschließt, wobei der Inhalt durch die Informationsverarbeitungsvorrichtung (600) bereitgestellt wird.

3. Informationsverteilungssystem, umfassend: eine Vielzahl von Funkvorrichtungen, die in eine Vielzahl von Fahrgestellen eingebaut sind; eine Vielzahl von drahtlosen Endgeräten (100) nach Anspruch 1; und eine Informationsverteilungsvorrichtung (600),
wobei
die Informationsverteilungsvorrichtung (600) umfasst:
eine Empfangseinheit (611), die dazu konfiguriert ist, von der Vielzahl von drahtlosen Endgeräten (100) Daten zu empfangen, die eine Identifikationsinformation, die eine Funkvorrichtung anzeigt, die in ein Fahrgestell eines Fahrzeugs eingebaut ist, von dem ein drahtloses Endgerät (100) ein Funksignal empfangen hat, und eine Information über ein Fahrgestell, an Bord dessen sich ein Nutzer des drahtlosen Endgeräts (100) befindet, einschließen;
eine Erzeugungseinheit (612), die dazu konfiguriert ist, basierend auf den durch die Empfangseinheit (611) empfangenen Daten einen Inhalt zu generieren, der eine Information einschließt, die dem Fahrgestell entspricht; und
eine Verteilungseinheit (613), die dazu konfiguriert ist, den durch die Erzeugungseinheit (612) generierten Inhalt an geeignete Nutzer zu verteilen.

4. Verfahren zum Spezifizieren eines Fahrgestells eines Fahrzeugs, umfassend:
einen ersten Schritt zum Empfangen, an einem drahtlosen Endgerät, einer Vielzahl von Funksignalen von einer Vielzahl von Funkvorrichtungen, die eine Funkvorrichtung einschließen, die in ein Fahrgestell eingebaut ist, an Bord dessen sich das drahtlose Endgerät befindet; **gekennzeichnet durch**
einen zweiten Schritt zum Berechnen, an dem drahtlosen Endgerät, einer Empfangszeitdauer und einer Signalstärke der Vielzahl von Funksignalen, die durch die erste Kommunikationseinheit (130) empfangen werden, wobei die Empfangszeitdauer gleich der Länge eines Zeitfensters, während dessen das Funksignal detektiert wird, oder gleich der Summe der Längen von Zeitfenstern, während deren das Funksignal detektiert wird, wenn das Funksignal mit Unterbrechungen übermitteln wird, ist,
einen dritten Schritt zum Ausschließen, an dem drahtlosen Endgerät, der Funksignale, die eine Empfangszeitdauer unterhalb einer vorbestimmten Schwelle aufweisen,
einen vierten Schritt zum Bestimmen, an dem drahtlosen Endgerät, basierend auf der Empfangszeitdauer und der Signalstärke der Vielzahl von Funksignalen, die in dem ersten Schritt empfangen wurden, einer Funkvorrichtung aus der Vielzahl von Funkvorrichtungen, die diese Funksignale überträgt, die nicht ausgeschlossen worden sind, und zum Spezifizieren der bestimmten Funkvorrichtung als die Funkvorrichtung, die in das Fahrgestell eingebaut ist; und
einen fünften Schritt zur Übermittlung, an dem drahtlosen Endgerät, von Daten, die eine Identifikationsinformation einschließen, die die Funkvorrichtung anzeigt, die in dem vierten Schritt spezifiziert wurde, an eine Informationsverteilungsvorrichtung (600).

5. Programm, das bewirkt, dass ein Computer ein Verfahren nach Anspruch 4 ausführt.

## Revendications

1. Terminal sans fil (100) comprenant :
une première unité de communication (130) configurée pour recevoir une pluralité de signaux radio provenant d'une pluralité de dispositifs radio comprenant un dispositif radio installé dans un wagon d'un véhicule à bord duquel se trouve le terminal sans fil ; **caractérisé par**
une unité de commande (110) configurée pour calculer une période de temps de réception et une puissance de signal de la pluralité de signaux radio reçus par la première unité de communication (130), dans lequel la période de temps de réception est égale à la longueur d'une fenêtre de temps pendant laquelle le signal radio est détecté ou à la somme des longueurs de fenêtres de temps pendant lesquelles le signal radio est détecté si le signal radio est transmis par intermittence, dans lequel l'unité de commande est configurée pour exclure les signaux radio ayant une période de réception inférieure à un seuil prédéterminé,
une unité de détermination (112) configurée pour déterminer, sur la base de la période de temps de réception et de la puissance de signal de la pluralité de signaux radio reçus par la première unité de communication (130), un dispositif radio parmi la pluralité de dispositifs radio transmettant ces signaux radio qui n'ont pas été exclus par l'unité de commande, et spécifiant ledit dispositif radio déterminé comme étant le dispositif radio installé dans le wagon ; et
une seconde unité de communication (140) configurée pour transmettre des données comprenant des informations d'identification indicatives du dispositif radio spécifié par l'unité de détermination (112) vers un appareil de distribution d'informations (600).

2. Terminal sans fil (100) selon la revendication 1, dans lequel la seconde unité de communication (140) est configurée pour transmettre un contenu comprenant des informations concernant le wagon, le contenu étant fourni par l'appareil de distribution d'informations (600).

3. Système de distribution d'informations comprenant : une pluralité de dispositifs radio installés dans une pluralité de wagons; une pluralité de terminaux sans fil (100) selon la revendication 1; et un appareil de distribution d'informations (600),
dans lequel
l'appareil de distribution d'informations (600) comprend :
une unité de réception (611) configurée pour recevoir, en provenance de la pluralité de terminaux sans fil (100), des données comprenant des informations d'identification indicatives d'un dispositif radio installé dans un wagon d'un véhicule à partir duquel un terminal sans fil (100) a reçu un signal radio et des informations concernant un wagon à bord duquel se trouve un utilisateur du terminai sans fil (100) ;
une unité de génération (612) configurée pour générer un contenu comprenant des informations correspondant au wagon sur la base des données reçues par l'unité de réception (611) ; et
une unité de distribution (613) configurée pour distribuer le contenu généré par l'unité de génération (612) aux utilisateurs appropriés.

4. Procédé de spécification d'un wagon d'un véhicule, comprenant :
une première étape de réception, au niveau d'un terminal sans fil, d'une pluralité de signaux radio provenant d'une pluralité de dispositifs radio comprenant un dispositif radio installé dans un wagon à bord duquel se trouve le terminal sans fil ; **caractérisé par**
une deuxième étape de calcul, au niveau du terminal sans fil, d'une période de réception et d'une puissance de signal de la pluralité de signaux radio reçus par la première unité de communication (130), dans lequel la période de temps de réception est égale à la longueur d'une fenêtre de temps pendant laquelle le signal radio est détecté ou à la somme des longueurs de fenêtres de temps pendant lesquelles le signal radio est détecté si le signal radio est transmis par intermittence,
une troisième étape d'exclusion, au niveau du terminal sans fil, des signaux radio ayant une période de réception inférieure à un seuil prédéterminé,
une quatrième étape de détermination, au niveau du terminal sans fil, sur la base de la période de temps de réception et de la puissance de signal de la pluralité de signaux radio reçus dans la première étape, d'un dispositif radio parmi la pluralité de dispositifs radio transmettant ces signaux radio qui n'ont pas été exclus, et la spécification dudit dispositif radio déterminé en tant que dispositif radio installé dans le wagon ; et
une cinquième étape de transmission, au niveau du terminal sans fil, de données comprenant des informations d'identification indicatives du dispositif radio spécifié dans la quatrième étape vers un appareil de distribution d'informations (600).

5. Programme qui amène un ordinateur à exécuter un procédé selon la revendication 4.
